# EUROPÄISCHE PATENTANMELDUNG

(11) **EP 3 502 439 A1**
(43) Veröffentlichungstag der Anmeldung: **26.06.2019**
(21) Anmeldenummer: 18211615.2
(22) Anmeldetag: 11.12.2018
(51) Int. Cl.: F02C 7/12, F02C 7/224

(54) **WÄRMETAUSCHERVORRICHTUNG FÜR EIN FLUGZEUGTRIEBWERK**

(30) Priorität: 20.12.2017 DE 102017223433
(71) Anmelder: Rolls-Royce Deutschland Ltd & Co KG, 15827 Blankenfelde-Mahlow (DE)
(72) Erfinder: SCHACHT, Michael, 15827 Blankenfelde-Mahlow (DE); BLUMRICH, Markus, 15827 Blankenfelde-Mahlow (DE)
(74) Vertreter: Maikowski & Ninnemann Patentanwälte Partnerschaft mbB

(57) **Zusammenfassung**

Die Erfindung betrifft eine Wärmetauschervorrichtung (1) für ein Flugzeugtriebwerk (4), mit einem Treibstoff-Öl-Wärmetauscher (10) zum Austausch von Wärme zwischen Treibstoff und Öl und einem Gehäuse (11) mit einem Lufteinlass (110) und einem Luftauslass (111), wobei der Treibstoff-ÖI-Wärmetauscher (10) derart zumindest teilweise innerhalb des Gehäuses (11) angeordnet ist, dass er durch vom Lufteinlass (110) zum Luftauslass (111) strömende Luft umströmbar oder überströmbar ist. Die Erfindung betrifft ferner ein Verfahren zum Betreiben eines Flugzeugtriebwerks.

## Beschreibung

Die Erfindung betrifft eine Wärmetauschervorrichtung für ein Flugzeugtriebwerk nach Anspruch 1, ein System mit einer solchen Wärmetauschervorrichtung und ein Verfahren zum Betreiben eines Flugzeugtriebwerks nach Anspruch 14.

Zum Wärmemanagement von Flugzeugtriebwerken und Flugzeugen wird üblicherweise eine Vielzahl separater Wärmetauscher eingesetzt, um die jeweilige Fluidtemperatur in einem Ölkreislauf, in einem Treibstoffzuführungssystem, in einem Zapfluftsystem, einem Klimaanlagen-Ölkreislauf usw. zu regulieren.

Die einzelnen Wärmetauscher sind dabei regelmäßig jeweils unabhängige Einheiten, die an verschiedenen Orten angeordnet sind, sodass oftmals lange und komplizierte Leitungsverbindungen zum Bereitstellen und Abführen der jeweiligen Fluide, insbesondere Öl, Treibstoff und Luft, notwendig sind. Die entsprechend große Anzahl an Rohr- und Schlauchverbindungen führt zu einem hohen Gewicht des gesamten Wärmemanagement-Systems und einem hohen Fertigungsaufwand mit entsprechenden Kosten. Zudem ist die Wartung derartiger Systeme aufwändig. Ferner kann eine große Anzahl von Leitungsverbindungen die Zugänglichkeit anderer Komponenten des Triebwerks oder des Flugzeugs beeinträchtigen. Auch werden oftmals einige Wärmetauscher nur in bestimmten Phasen des Betriebs des Flugzeugtriebwerks eingesetzt und stellen ansonsten während des Fluges Ballast dar.

Die US 9,004,154 B2 beschreibt eine in zwei Sektionen unterteilte Vorrichtung mit einer Kombination aus einem Treibstoff-Öl-Wärmetauscher in einer Sektion und einem Luft-Öl-Wärmetauscher in der anderen Sektion. Dies führt zu einem komplexen Aufbau, der zudem die Anordnung eines Bypass-Ventils zwischen den Ölkreisläufen der beiden Sektionen notwendig macht. Zudem eignet sich diese Vorrichtung nur für bestimmte Anwendungen.

Die US 2017/0184028 A1 beschreibt eine Wärmetauscheranordnung mit Treibstoffströmungspfaden und Ölströmungspfaden, wobei die Wärmetauscheranordnung in einem Bypass- oder Nebenstromkanal eines Turbofan-Triebwerks angeordnet ist und so vom Nebenluftstrom des Triebwerks gekühlt wird. Der Nebenluftstrom dient aber zum Antrieb des Flugzeugs und ist nicht für die Wärmetauscheranordnung einstellbar, die somit in vielen Situationen nicht optimal betrieben werden kann. Zudem eignet sich die Anordnung im Nebenstromkanal nur in bestimmten Ausgestaltungen von Flugzeugtriebwerken.

Es besteht die Aufgabe, den Wärmeaustausch zwischen Treibstoff, Öl und Luft zu verbessern, insbesondere bei einem Flugzeugtriebwerk.

Die Aufgabe wird durch eine Wärmetauschervorrichtung für ein Flugzeugtriebwerk zum Wärmeaustausch zwischen Treibstoff, Öl und Luft mit den Merkmalen des Anspruchs 1 gelöst.

Danach umfasst eine Wärmetauschervorrichtung einen Treibstoff-Öl-Wärmetauscher zum Austausch von Wärme zwischen Treibstoff und Öl für das Flugzeugtriebwerk sowie ein Gehäuse. Das Gehäuse umfasst einen Lufteinlass und einem Luftauslass. Der Treibstoff-Öl-Wärmetauscher ist (zumindest teilweise) im Inneren des Gehäuses angeordnet, sodass der Treibstoff-Öl-Wärmetauscher durch Luft, die vom Lufteinlass zum Luftauslass des Gehäuses strömt, umströmt oder überströmt werden kann, sodass zwischen dem Treibstoff-Öl-Wärmetauscher und der strömenden Luft Wärme austauschbar ist.

Mittels einer derartigen Wärmetauschervorrichtung kann besonders effizient Wärme zischen den drei Medien Luft, Öl und Treibstoff ausgetauscht werden. Der Luftstrom durch den Lufteinlass ist besonders gut steuerbar. Zudem kann eine solche Wärmetauschervorrichtung besonders kompakt ausgeführt werden. Die Kombination der drei Fluide in einer Vorrichtung erlaubt es, gleich mehrere separate Wärmetauscher zu ersetzen, was es ermöglicht, insgesamt wesentlich kürzere Leitungsverbindungen einzusetzen. Durch das Überströmen oder Umströmen des Treibstoff-Öl-Wärmetauschers können in kurzer Zeit große Mengen an Luft durch die Wärmetauschervorrichtung geleitet werden, was einen besonders wirkungsvollen Betrieb ermöglicht. Der Treibstoff-Öl-Wärmetauscher ist bevorzugt für sich genommen eine vorprüfbare und/oder vormontierte Baugruppe, die z.B. in das Gehäuse eingesetzt ist.

In einer Ausgestaltung ist der Treibstoff-Öl-Wärmetauscher zwischen dem Lufteinlass und dem Luftauslass angeordnet. Dies ermöglicht einen besonders einfachen Aufbau und einen effizienten Wärmetausch und insbesondere ein effizientes Umströmen oder Überströmen des Treibstoff-Öl-Wärmetauschers durch Luft. Die Anordnung des Treibstoff-Öl-Wärmetauschers im Inneren des Gehäuses bildet somit einen Luftkühler aus.

Der Treibstoff-Öl-Wärmetauscher umfasst insbesondere eine Ölströmungspfadanordnung zum Anschluss an ein Ölsystem des Flugzeugtriebwerks und eine Treibstoffströmungspfadanordnung zum Anschluss an ein Treibstroffsystem des Flugzeugtriebwerks. Insbesondere handelt es sich bei dem Treibstoff-Öl-Wärmetauscher um einen treibstoffgekühlten Ölkühler (auch als fuel-cooled oil cooler bezeichnet, kurz FCOC). Die Ölströmungspfadanordnung und die Treibstoffströmungspfadanordnung können eine Kühlermatrix ausbilden.

Zwischen durch die Ölströmungspfadanordnung strömendem Öl und durch die Treibstoffströmungspfadanordnung strömendem Treibstoff ist Wärme austauschbar. Insbesondere kann der Treibstoff das Öl kühlen.

Der Lufteinlass ist mit dem Luftauslass insbesondere durch eine Luftströmungspfadanordnung verbunden. Die Luftströmungspfadanordnung umgibt die Ölströmungspfadanordnung (zumindest teilweise), sodass Wärme zwischen durch die Luftströmungspfadanordnung strömender Luft und durch die Ölströmungspfadanordnung strömendem Öl austauschbar ist. Hierdurch ist ein besonders effizienter Wärmeaustausch möglich.

Alternativ oder zusätzlich umgibt die Ölströmungspfadanordnung die Treibstoffströmungspfadanordnung (zumindest teilweise). In einer Weiterbildung ist zumindest ein Abschnitt der Luftströmungspfadanordnung durch zumindest einen Abschnitt der Ölströmungspfadanordnung von zumindest einem Abschnitt der Treibstoffströmungspfadanordnung getrennt. Ein Aufbau mit der Treibstoffströmungspfadanordnung als inneren Kern, der von der Ölströmungspfadanordnung umgeben ist, die wiederum durch die Luftströmungspfadanordnung umgeben ist, ermöglicht eine besonders effiziente Temperierung des Öls durch den Treibstoff und/oder die Luft.

Der Treibstoff-Öl-Wärmetauscher kann ein Wärmetauschergehäuse umfassen, in dem insbesondere die Ölströmungspfadanordnung und die Treibstoffströmungspfadanordnung untergebracht sind. Das Wärmetauschergehäuse ist ein Gehäuse; die Bezeichnung Wärmetauschergehäuse dient zur vereinfachten Unterscheidung vom (äußeren) Gehäuse der gesamten Wärmetauschervorrichtung. Das Wärmetauschergehäuse kann zumindest teilweise, insbesondere überwiegend oder vollständig, innerhalb des Gehäuses angeordnet sein, insbesondere durch vom Lufteinlass zum Luftauslass strömende Luft umströmbar oder überströmbar sein. Dies ermöglicht einen besonders einfachen und robusten Aufbau der Wärmetauschervorrichtung.

Der Treibstoff-Öl-Wärmetauscher umfasst in einer Ausgestaltung Kühlrippen, die durch vom Lufteinlass zum Luftauslass strömende Luft umströmbar sind und insbesondere vom Wärmetauschergehäuse abstehen. Hierdurch ist ein besonders einfacher und effizienter Wärmeaustausch möglich. Optional stehen die Kühlrippen sternförmig vom Wärmetauschergehäuse ab.

Die Wärmetauschervorrichtung kann ein Ventil oder mehrere Ventile zum Steuern, insbesondere Regeln eines Luftstroms durch den Lufteinlass umfassen. Durch das Ventil kann zumindest eine an den Lufteinlass angeschlossene Zuleitung geöffnet, teilweise geöffnet oder geschlossen werden. Hierdurch kann die Wärmetauschervorrichtung in verschiedenen Betriebszuständen des Flugzeugtriebwerks die Temperatur des Öls und optional des Treibstoffs in einer jeweils optimierten Weise steuern, insbesondere regeln.

Ein optionales Steuerungssystem steuert (insbesondere regelt) das eine Ventil oder die mehreren Ventile in Abhängigkeit einer Temperatur des Öls und/oder in Abhängigkeit einer Temperatur des Treibstoffs und/oder der Luft. Zur Steuerung und/oder Regelung weist die Wärmetauschervorrichtung optional einen oder mehrere mit dem Steuerungssystem wirkverbundene Temperaturfühler auf, z.B. jeweils einen oder zumindest einen entsprechend angeordneten Temperaturfühler für eine Öltemperatur, eine Treibstofftemperatur und eine Lufttemperatur.

Gemäß einem Aspekt wird ein System für ein Flugzeugtriebwerk bereitgestellt, umfassend einen Triebwerkpylon, der zur Befestigung des Flugzeugtriebwerks an einem Flugzeug ausgebildet ist, insbesondere an einem Flügel oder einem Rumpf des Flugzeugs. Das System umfasst eine Wärmetauschervorrichtung nach einer beliebigen hierin beschriebenen Ausgestaltung. Dabei ist die Wärmetauschervorrichtung am oder im Triebwerkpylon angeordnet, insbesondere am Triebwerkspylon befestigt. Hierdurch werden eine besonders platzsparende Anordnung sowie optimierte Leitungsverbindungen ermöglicht.

Gemäß einem weiteren Aspekt wird ein System für ein Flugzeugtriebwerk bereitgestellt, umfassend einen Druckluftstarter, der zum Starten des Flugzeugtriebwerks ausgebildet ist, oder allgemein eine Druckluftquelle und/oder Heißluftquelle. Das System umfasst eine Wärmetauschervorrichtung nach einer beliebigen hierin beschriebenen Ausgestaltung. Dabei ist der Lufteinlass der Wärmetauschervorrichtung an einen Luftauslass des Druckluftstarters angeschlossen ist. Der Druckluftstarter stößt an seinem Luftauslass beim Starten des Flugzeugtriebwerks heiße Luft aus. Diese kann somit zum Erwärmen des Öls eingesetzt werden. Das bei einem kalten Start des Flugzeugtriebwerks üblicherweise kalte und zähflüssige Öl kann somit fließfähiger gemacht werden. Hierdurch ist es möglich, den Öldruck zu reduzieren. Dies kann die Anforderungen an Bauteile des Ölsystems vereinfachen und sich positiv auf die Lebensdauer des Ölsystems und der mittels des Öls geschmierten Lager auswirken. Zudem ist es möglich, die Warmlaufphase des Flugzeugtriebwerks zu verkürzen. Der Druckluftstarter umfasst z.B. eine durch einen Luftstrom, z.B. von einem Hilfstriebwerk, angetriebene oder antreibbare Turbine, die über ein Hilfsgetriebe (auch als accessory gearbox bezeichnet, kurz AGB) mit einer Welle des Flugzeugtriebwerks gekoppelt ist, insbesondere einer Hochdruckwelle, die einen Hochdruckverdichter trägt und/oder antreibt.

Das System kann eines oder mehrere Ventile umfassen, die steuerbar, insbesondere regelbar sind, um selektiv (insbesondere warme) Luft vom Luftauslass des Druckluftstarters oder (insbesondere kalte) Außenluft, also Umgebungsluft, an den Lufteinlass der Wärmetauschervorrichtung zu leiten. Hierdurch kann die Wärmetauschervorrichtung je nach Notwendigkeit das Öl erwärmen oder kühlen.

Die Aufgabe wird auch durch ein Verfahren zum Betreiben eines Flugzeugtriebwerks mit den Merkmalen des Anspruchs 14 gelöst. Dabei wird mittels einer Wärmetauschervorrichtung nach einer beliebigen hierin beschriebenen Ausgestaltung Öl und Treibstoff an das Flugzeugtriebwerk bereitgestellt. Hinsichtlich der Vorteile des Verfahrens wird auf die obigen zur Wärmetauschervorrichtung Bezug genommen.

Bei dem Verfahren können eines oder mehrere Ventile der Wärmetauschervorrichtung derart gesteuert werden, dass in einer Kaltstartphase des Flugzeugtriebwerks (warme) Luft von einem Luftauslass eines Druckluftstarters des Flugzeugtriebwerks an den Lufteinlass der Wärmetauschervorrichtung geleitet wird, um das Öl zu erwärmen, und während einer warmgelaufenen Betriebsphase des Flugzeugtriebwerks (kalte) Außenluft an den Lufteinlass der Wärmetauschervorrichtung geleitet wird, um das Öl zu kühlen. Somit kann je nach Betriebsphase des Flugzeugtriebwerks eine optimierte Wärmetauschwirkung erzielt werden, um die Leistungsfähigkeit und/oder die Lebensdauer des Flugzeugtriebwerks zu verbessern.

Im Zusammenhang mit den in den Figuren dargestellten Ausführungsbeispielen wird die Erfindung erläutert. Dabei zeigen
- Fig. 1: eine schematische perspektivische Darstellung eines Flugzeugs mit im Bereich eines Hecks des Flugzeugs angeordneten Flugzeugtriebwerken;
- Fig. 2: eine schematische Darstellung einer Wärmetauschervorrichtung, die an einen Druckluftstarter eines Flugzeugtriebwerks angeschlossen ist;
- Fig. 3: eine schematische Darstellung eines Flugzeugtriebwerks und eines Triebwerkspylons mit einer im Triebwerkspylon angeordneten Wärmetauschervorrichtung;
- Fig. 4: eine schematische Darstellung eines Flugzeugtriebwerks und eines Triebwerkspylons mit einer im Triebwerkspylon angeordneten Wärmetauschervorrichtung in einer Ansicht von oben, wobei Luftströmungen in einer Startphase des Flugzeugtriebwerks gezeigt sind;
- Fig. 5: die Darstellung in einer Ansicht gemäß Fig. 4, wobei Luftströmungen in einer warmgelaufenen Betriebsphase des Flugzeugtriebwerks, z.B. während eines Flugs, gezeigt sind;
- Fig. 6: eine schematische perspektivische Darstellung des Flugzeugtriebwerks, des Triebwerkspylons und der Wärmetauschervorrichtung gemäß Fig. 4 und 5 in einer Ansicht von unten;
- Fig. 7: eine schematische perspektivische Detailansicht der Wärmetauschervorrichtung gemäß Fig. 4 bis 6;
- Fig. 8: eine schematische Detailansicht der an Rohrleitungen angeschlossenen Wärmetauschervorrichtung gemäß Fig. 4 bis 7;
- Fig. 9: eine schematische Querschnittsdarstellung der angeschlossenen Wärmetauschervorrichtung gemäß Fig. 4 bis 8;
- Fig. 10A-10D: verschiedene schematische, perspektivische Ansichten eines Treibstoff-Öl-Wärmetauschers für die Wärmetauschervorrichtung gemäß Fig. 2, Fig. 3 oder gemäß Fig. 4 bis 9; und
- Fig. 10E-10H: verschiedene schematische, Querschnittsansichten des Treibstoff-Öl-Wärmetauschers gemäß Fig. 10A bis 10D.

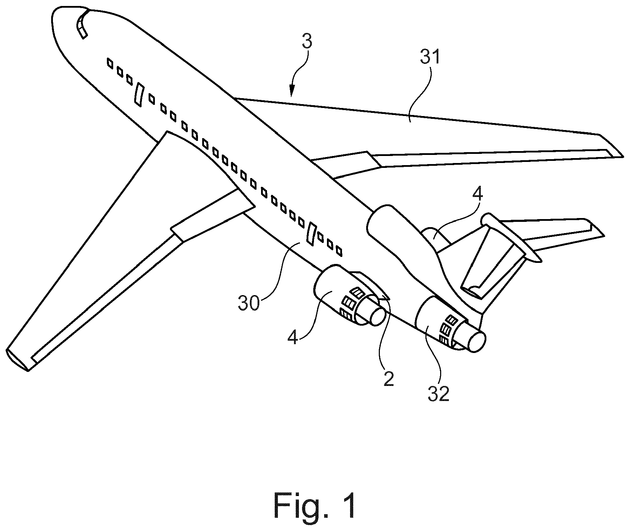

Fig. 1 zeigt ein Flugzeug 3 mit mehreren Flugzeugtriebwerken 4, mittels denen das Flugzeug 3 antreibbar ist. Vorliegend umfasst das Flugzeug 3 zwei Flugzeugtriebwerke 4, die jeweils mittels eines Triebwerkspylons 2 am Flugzeug 3 befestigt sind. Ferner umfasst das Flugzeug 3 ein optionales Hilfstriebwerk 32, das zentral am Heck des Flugzeugs 3 angeordnet ist.

Die beiden jeweils mittels eines Triebwerkspylons 2 am Flugzeug 3 befestigten Flugzeugtriebwerke 4 sind auf gegenüberliegenden Seiten des Flugzeugs 3 an einem Rumpf 30 des Flugzeugs 3 montiert, vorliegend im Bereich des Hecks des Flugzeugs 3. Alternativ oder zusätzlich können Flugzeugtriebwerke 4 mittels eines Triebwerkspylons 2 auch an Flügeln 31 des Flugzeugs montiert sein.

Die Flugzeugtriebwerke 4 sind vorliegend als Strahltriebwerke, konkret als Gasturbinen ausgebildet.

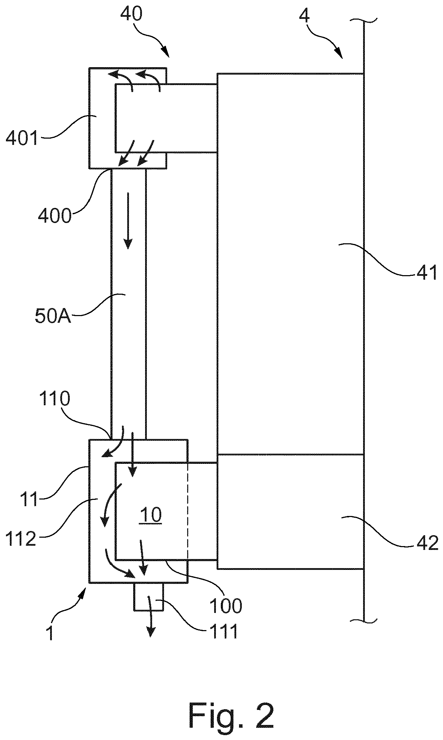

Fig. 2 zeigt ein System mit einer Ausführung einer Wärmetauschervorrichtung 1, die über eine Rohrleitung 50A mit einem Druckluftstarter 40 eines der Flugzeugtriebwerke 4 des Flugzeugs 3 gemäß Fig. 1 verbunden ist.

Die Wärmetauschervorrichtung 1 umfasst einen Treibstoff-Öl-Wärmetauscher 10, vorliegend in Form eines treibstoffgekühlten Ölkühlers (FCOC). Der Treibstoff-Öl-Wärmetauscher 10 weist einen Einlass und einen Auslass für Öl und einen Einlass und einen Auslass für Treibstoff auf, die in der schematischen Darstellung der Fig. 2 nicht gezeigt sind, im Zusammenhang mit den nachfolgenden Figuren aber noch näher erläutert werden. Der Einlass und der Auslass für Öl des Treibstoff-Öl-Wärmetauschers 10 sind an einen Öltank 42 angeschlossen. Mittels einer Pumpe kann Öl aus dem Öltank 42 entnommen und dem Treibstoff-Öl-Wärmetauscher 10 zugeführt werden, der das Öl kühlt oder erwärmt. Das gekühlte oder erwärmte Öl kann wieder in den Öltank 42 zurückgegeben werden.

Das Öl ist einerseits mittels des Treibstoffs temperierbar, insbesondere kühlbar. Der Treibstoff wird im Flugzeug regelmäßig in den Flügeln gelagert, wo er je nach Flughöhe durch die Umgebungsluft gekühlt wird. Umgekehrt kann das Öl den Treibstoff erwärmen.

Ferner ist das Öl mittels Luft vom Druckluftstarter 40 temperierbar, insbesondere erwärmbar. Hierzu ist der Treibstoff-Öl-Wärmetauscher 10 innerhalb eines Gehäuses 11 angeordnet. Das Gehäuse 11 umfasst einen Lufteinlass 110 und einen Luftauslass 111. Durch den Lufteinlass 110 eingespeiste Luft strömt entlang einer Luftströmungspfadanordnung 112, die zumindest einen Strömungspfad für die Luft definiert, zum Luftauslass 111. Über den Luftauslass 111 wird die Luft z.B. in die sogenannte Zone 1 des Flugzeugtriebwerks 4 geleitet, alternativ führt der Luftauslass 111 an die Umgebung. Vorliegend wird die Luftströmungspfadanordnung 112 gebildet durch einen Zwischenraum zwischen einer Innenseite des (äußeren) Gehäuses 11 der Wärmetauschervorrichtung 1 und einer Außenseite des Treibstoff-Öl-Wärmetauschers 10, konkret eines Wärmetauschergehäuses 100 des Treibstoff-Öl-Wärmetauschers 10. Das Wärmetauschergehäuse 100 ist z.B. aus Metall hergestellt. Auch das (äußere) Gehäuse 11 kann aus Metall hergestellt sein.

Da das Öl somit sowohl erwärmbar als auch kühlbar ist, kann auf eine oder mehrere weitere Wärmetauscher verzichtet werden, was die Komplexität des Systems und das Gewicht deutlich reduzieren kann. Ein weiterer Vorteil der Wärmetauschervorrichtung 1 ist, dass der Treibstoff-Öl-Wärmetauscher 10 durch das zusätzliche Gehäuse 11 von der Umgebung abgeschirmt ist, sodass die Öltemperatur besonders gut kontrollierbar ist. Insbesondere können hierdurch benachbarte Komponenten vor der Wärme des Öls und vor der potentiell sehr heißen Abluft des Druckluftstarters 40 geschützt werden.

Der Druckluftstarter 40 ist mit einer Abdeckung 401 versehen, die Abluft des Druckluftstarters 40 aufnimmt. Die Abdeckung 401 weist einen Luftauslass 400 auf. Der Luftauslass 400 des Druckluftstarters 40 ist an die Rohrleitung 50A angeschlossen. Die Rohrleitung 50A ist an den Lufteinlass 110 der Wärmetauschervorrichtung 1 angeschlossen, sodass Luft aus der Abdeckung 401 des Druckluftstarters 40 in das Gehäuse 11 der Wärmetauschervorrichtung 1 geleitet wird.

Der Druckluftstarter 40 ist mit einem Hilfsgetriebe 41 des Flugzeugtriebwerks 4 wirkverbunden. Mittels des Druckluftstarters 40 und des Hilfsgetriebes 41 kann das Flugzeugtriebwerk 4 gestartet werden. Der Druckluftstarter 40 wird z.B. mittels Druckluft vom Hilfstriebwerk 32 des Flugzeugs 3 gemäß Fig. 1 angetrieben.

Die Wärmetauschervorrichtung 1 dient als Treibstoff-Öl-Luft-Wärmetauscher, auch als fuel-oil-air heat exchanger, kurz FOAHE zu bezeichnen.

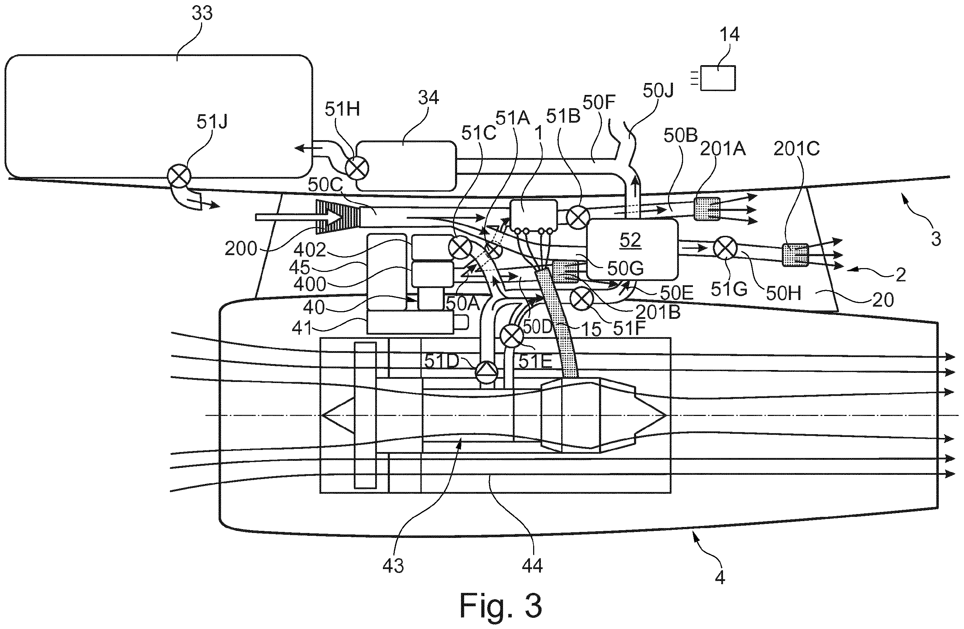

Die Fig. 3 veranschaulicht ein weiteres System mit einer Wärmetauschervorrichtung 1. Die Wärmetauschervorrichtung 1 ist im Inneren eines Pylongehäuses 20 eines Triebwerkspylons 2, z.B. des Triebwerkspylons 2 gemäß Fig. 1, angeordnet. Der Triebwerkspylon 2 verbindet das Flugzeugtriebwerk 4 mit dem Flugzeug 3 wie in Fig. 1 gezeigt am Rumpf 30 oder alternativ an einem der Flügel 31 des Flugzeugs 3.

Die Wärmetauschervorrichtung 1 ist über jeweils eine Zuleitung und eine Ableitung mit einem Ölsystem und einem Treibstoffsystem des Flugzeugtriebwerks 4 verbindbar und gemäß Fig. 3 verbunden. Diese Zu- und Ableitungen sind in Fig. 3 gesammelt als Öl- und Treibstoffleitungssystem 15 gezeigt. Das Ölsystem des Flugzeugtriebwerks 4 dient z.B. zum Schmieren von einem oder mehreren Lagern des Flugzeugtriebwerks 4. Das Ölsystem kann ein kombiniertes Triebwerk- und Generator-Ölsystem sein.

Entsprechend Fig. 2 ist gemäß Fig. 3 die Wärmetauschervorrichtung 1 über eine Rohrleitung 50A an den Luftauslass 400 des Druckluftstarters 40 angeschlossen, sodass Luft vom Luftauslass 400 des Druckluftstarters 40 in die Wärmetauschervorrichtung 1 geleitet werden kann. Abluft der Wärmetauschervorrichtung 1 ist über eine weitere Rohrleitung 50B (die an den Luftauslass der Wärmetauschervorrichtung 1 angeschlossen ist) durch eine Luftauslassöffnung 201A in die Umgebung abführbar. Die Luftauslassöffnung 201A ist z.B. in einer Wand des Pylongehäuses 20 ausgebildet.

Im Unterschied zur Ausführung gemäß Fig. 2 ist die Wärmetauschervorrichtung 1 gemäß Fig. 3 lufteinlassseitig zusätzlich über eine Rohrleitung 50C an einer Lufteinlassöffnung 200 für Umgebungsluft angeschlossen. Die Lufteinlassöffnung 200 ist vorliegend in einer Außenwand des Pylongehäuses 20 ausgebildet, wobei alternativ auch eine Anordnung an einer äußeren Oberfläche eines Außengehäuses des Flugzeugtriebwerks 4 möglich ist. Die Wärmetauschervorrichtung 1 kann mit Umgebungsluft durch die Lufteinlassöffnung 200 und/oder mit Abluft des Druckluftstarters 40 versorgt werden. Um zu steuern, aus welcher dieser Quellen Luft, insbesondere welche Menge an Luft, in die Wärmetauschervorrichtung 1 geleitet wird, ist im Inneren der Rohrleitung 50A zwischen dem Druckluftstarter 40 und der Wärmetauschervorrichtung 1 ein einstellbares Ventil 51A angeordnet. Je nach Einstellung dieses Ventils 51A sind größere oder kleinere Mengen an Luft (oder gar keine Luft) vom Druckluftstarter 40 an die Wärmetauschervorrichtung 1 bereitstellbar.

Wie in Fig. 3 zu erkennen, ist stromab des Luftauslasses 400 des Druckluftstarters 40 eine Verzweigung vorgesehen, sodass Luft vom Druckluftstarter 40 auch entlang einer von der Rohrleitung 50A zur Wärmetauschervorrichtung 1 abgezweigten Rohrleitung 50D entweichen kann. Diese Rohrleitung 50D führt zu einer Luftauslassöffnung 201B an die Umgebung. Diese Luftauslassöffnung ist in der Außenwand des Pylongehäuses 20 vorgesehen.

Der Lufteinlass 402 des Druckluftstarters 40 ist an einen Hochdruckverdichter 43 des Flugzeugtriebwerks 4 angeschlossen, vorliegend mittels einer mehrfach verzweigten Rohrleitung, auf die hier gesammelt als Rohrleitung 50E Bezug genommen wird. Die Rohrleitung 50E weist einen Abschnitt auf, der an den Hochdruckverdichter 43 (oder allgemein einen Verdichter des Flugzeugtriebwerks 4) angeschlossen ist und ein Rückschlagventil 51D aufweist, und einen parallel dazu verlaufenden Abschnitt, der ein einstellbares Ventil 51E aufweist. Diese beiden Abschnitte sind stromab der Ventile 51D, 51E zusammengeführt. Ein Abzweig der an den Hochdruckverdichter 43 (oder allgemein einen Verdichter des Flugzeugtriebwerks 4) angeschlossenen Rohrleitung 50E führt zum Lufteinlass 402 des Druckluftstarters 40, vorliegend über ein einstellbares Ventil 51C. Der Druckluftstarter 40 ist ausgebildet, das Hilfsgetriebe 41 anzutreiben, um das Triebwerk 4 zu starten. Das Hilfsgetriebe 41 ist an eine Welle des Hochdruckverdichters 43 gekoppelt (oder allgemein an eine Welle eines Verdichters des Flugzeugtriebwerks 4).So kann das Hilfsgetriebe 41 die Welle zum Start des Flugzeugtriebwerks 4 antreiben. Im Betrieb des Flugzeugtriebwerks 4 kann das Hilfsgetriebe 41 durch das Flugzeugtriebwerk 4 angetrieben werden, z.B. um mittels eines Generators 45 (z.B. in Form eines sogenannten integrated drive generator, kurz IDG) elektrischen Strom zu erzeugen. Ein weiterer Abzweig der Rohrleitung 50E führt (über ein weiteres einstellbares Ventil 51F) an einen Vorkühler 52, der weiter unten noch näher erläutert werden wird. Alternativ oder zusätzlich zum Anschluss an den Hochdruckverdichter 43 (oder allgemein an einen Verdichter des Flugzeugtriebwerks 4) kann der Lufteinlass 402 des Druckluftstarters 40 an das Hilfstriebwerk 32 oder ein anderes Flugzeugtriebwerk 4 des Flugzeugs angeschlossen sein.

Der Vorkühler 52 stellt Luft mit einstellbarer Temperatur und einstellbarem Druck an das Flugzeug 3 bereit. Hierzu ist der Vorkühler 52 vorliegend über eine Rohrleitung 50F an eine Atmosphärensteuereinheit 34 (auch als environmental control unit, kurz ECU bezeichnet) angeschlossen. Diese ist wiederum über zumindest ein einstellbares Ventil 51H an eine Kabine 33 des Flugzeugs 3 angeschlossen. Die Kabine 33 ist z.B. eine Kabine für Fluggäste. Die Kabine 33 wird mittels des Vorkühlers 52 und der Atmosphärensteuereinheit 34 klimatisiert und auf einem vorgegebenen Luftdruck gehalten. Abluft aus der Kabine 33 ist über ein einstellbares Ventil 51J an die Umgebung abführbar.

Der Vorkühler 52 ist optional an das Hilfstriebwerk 32 und/oder ein anderes Flugzeugtriebwerk 4 des Flugzeugs 3 angeschlossen. Beispielsweise weist die Rohrleitung 50F zwischen dem Vorkühler 52 und der Atmosphärensteuereinheit 34 hierzu einen Abzweig zu einer dorthin führenden Rohrleitung 50J auf.

Wie bereits erwähnt, ist der Vorkühler 52 über das einstellbare Ventil 51F mit dem Hochdruckverdichter 43 verbunden, sodass selektiv warme Luft an den Vorkühler 52 bereitstellbar ist. Ferner weist der Vorkühler 52 einen Einlass für (kalte) Luft auf. Im Beispiel gemäß Fig. 32 ist dieser Einlass über eine Rohrleitung 50G an die Lufteinlassöffnung 200 am Triebwerkspylon 20 angeschlossen, vorliegend über eine Verzweigung mit der Rohrleitung 50C zwischen der Lufteinlassöffnung 200 und der Wärmetauschervorrichtung 1. Alternativ könnte dieser Einlass des Vorkühlers 52 auch über eine separate Lufteinlassöffnung und/oder durch einen Anschluss an einen Mantelstromkanal 44 des Flugzeugtriebwerks 4 mit Umgebungsluft versorgt werden.

Der Vorkühler 52 weist ferner einen Luftauslass auf, der über eine Rohrleitung 50H an eine Luftauslassöffnung 201C angeschlossen ist, durch die Luft an die Umgebung abgegeben werden kann. Die Rohrleitung 50H ist mit einem einstellbaren Ventil 51G versehen, welches eine Durchflussrate von Luft durch den Luftauslass des Vorkühlers 52 einstellen kann. Alternativ könnte die Rohrleitung 50H vom Luftauslass des Vorkühlers 52 auch in dieselbe Luftauslassöffnung 201A münden, die auch an die Wärmetauschervorrichtung 1 angeschlossen ist. Alternativ oder zusätzlich können die Rohrleitungen 50B und 50D, die von der Wärmetauschervorrichtung 1 und dem Druckluftstarter 40 zu separaten Luftdurchlassöffnungen 201A und 201B führen, zusammengeführt sein und durch eine gemeinsame Luftauslassöffnung Luft nach Außen führen.

Zumindest ein Ventil, insbesondere sämtliche (einstellbare) Ventile 51A-51C, 51E-51J sind mit einem Steuerungssystem 14 wirkverbunden, z.B. durch elektrische Leitungen, also mittels des Steuerungssystems 14 einstellbar. Durch entsprechende Einstellung der Ventile 51A-51C, 51E-51J kann das Steuerungssystem 14 somit Luft an den Druckluftstarter 40, die Wärmetauschervorrichtung 1 und/oder die Kabine 33 bereitstellen, insbesondere mit vorgegebenen oder vorgebbaren Werten für Druck und/oder Temperatur. Insbesondere ist es so möglich, in unterschiedlichen Betriebsphasen des Flugzeugtriebwerks 4 und/oder des Flugzeugs 3 einen jeweils optimierten Wärmeaustausch zwischen Treibstoff, Öl und Luft bereitzustellen, wobei anstelle einer größeren Anzahl von Wärmetauschern nur die Wärmetauschervorrichtung 1 und der Vorkühler 52 nötig sind. Entsprechend ist das System aus Rohrleitungen 50A-50H vergleichsweise besonders einfach aufgebaut.

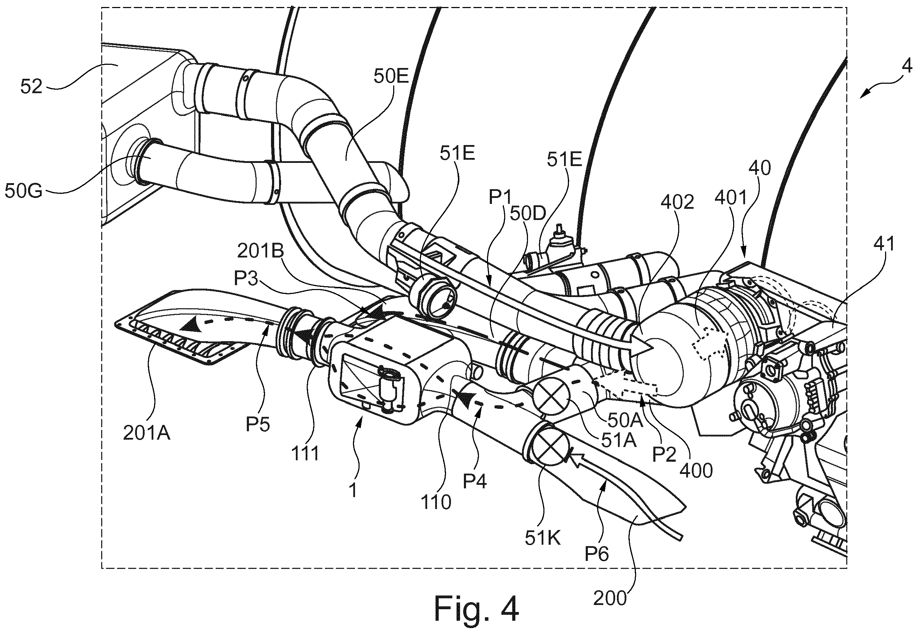

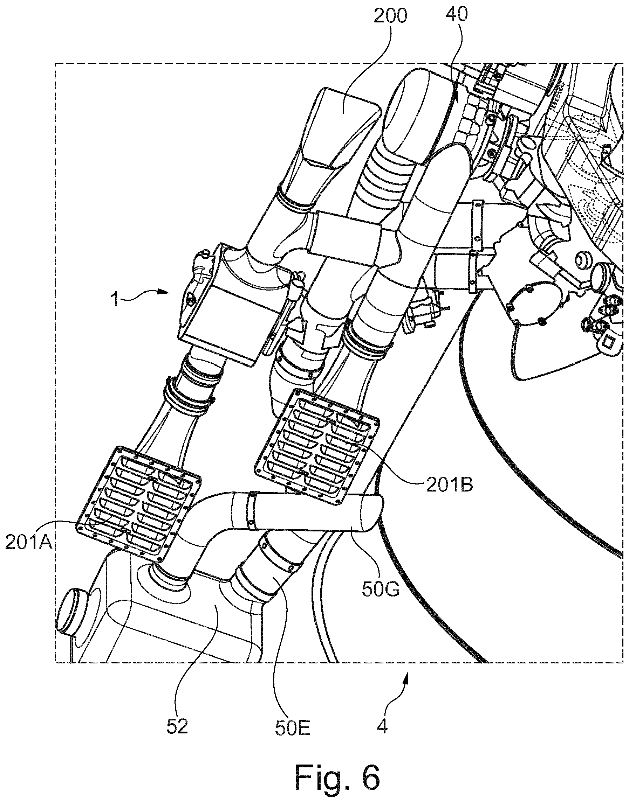

Im Zusammenhang mit den Fig. 4 bis 6 werden nun verschiedene mögliche Betriebsweisen der Wärmetauschervorrichtung 1 und des Systems mit dieser Wärmetauschervorrichtung 1 erläutert. Das darin gezeigte System entspricht dem System gemäß Fig. 3, wobei im Unterschied dazu gemäß Fig. 4 bis 6 der Vorkühler 52 nicht an die Lufteinlassöffnung 200, sondern über die entsprechend verlegte Rohrleitung 50G an den Mantelstromkanal 44 des Flugzeugtriebwerks 4 angeschlossen ist. Im Übrigen entspricht das System gemäß Fig. 4 bis 6 dem System gemäß Fig. 3, wobei bestimmte Details der Übersichtlichkeit halber nicht erneut dargestellt sind.

Dabei zeigt die Fig. 4 anhand von Pfeilen die Strömungspfade P1-P6 von Luftströmen durch die verschiedenen Rohrleitungen während eines Starts, insbesondere eines Kaltstarts des Flugzeugtriebwerks 4.

Von dem Hilfstriebwerk 32 oder einem anderen Flugzeugtriebwerk 4 wird Luft bereitgestellt, im vorliegenden Beispiel über den Vorkühler 52. Von dort strömt Luft durch die Rohrleitung 50E entlang eines Strömungspfades P1 zum Lufteinlass 402 des Druckluftstarters 40 und treibt den Druckluftstarter 40 an.

Vom Druckluftstarter 40 strömt warme Luft entlang eines Strömungspfades P2 vom Luftauslass 400 des Druckluftstarters 40 zu den miteinander verzweigten Rohrleitungen 50A, 50D. Ein Teil dieses Luftstroms strömt über die Rohrleitung 50D entlang eines Strömungspfades P3 (lang gestrichelter Pfeil) durch die Luftauslassöffnung 201B in die Umgebung. Ein weiterer Teil des Luftstroms strömt entlang eines Strömungspfades P4 (kurz gestrichelter Pfeil) vom Druckluftstarter 40 zum Lufteinlass 110 der Wärmetauschervorrichtung 1. Hierzu ist das in diesem Strömungspfad P4 angeordnete Ventil 51A geöffnet.

In der Wärmetauschervorrichtung 1 umströmt dieser Luftstrom den Treibstoff-Öl-Wärmetauscher 10 der Wärmetauschervorrichtung 1 und erwärmt diese. Durch den Luftauslass 111 der Wärmetauschervorrichtung 1 strömt die Luft weiter entlang eines Strömungspfades P5 (kurz gestrichelter Pfeil) aus der Luftauslassvorrichtung 201A in die Umgebung.

Ein weiteres einstellbares Ventil 51K zwischen der Lufteinlassöffnung 200 und dem Lufteinlass 110 der Wärmetauschervorrichtung 1 ist geschlossen, sodass ein möglicher Luftstrom entlang eines Strömungspfades P6 von der Lufteinlassöffnung 200 zur Wärmetauschervorrichtung 1 blockiert ist.

Hierdurch wird das beim Start des Flugzeugtriebwerks noch kalte und zähflüssige Öl durch die warme Luft vom Druckluftstarter 40 erwärmt. Dadurch wird es dünnflüssiger und kann leichter in die Lager des Flugzeugtriebwerks 4 geleitet werden.

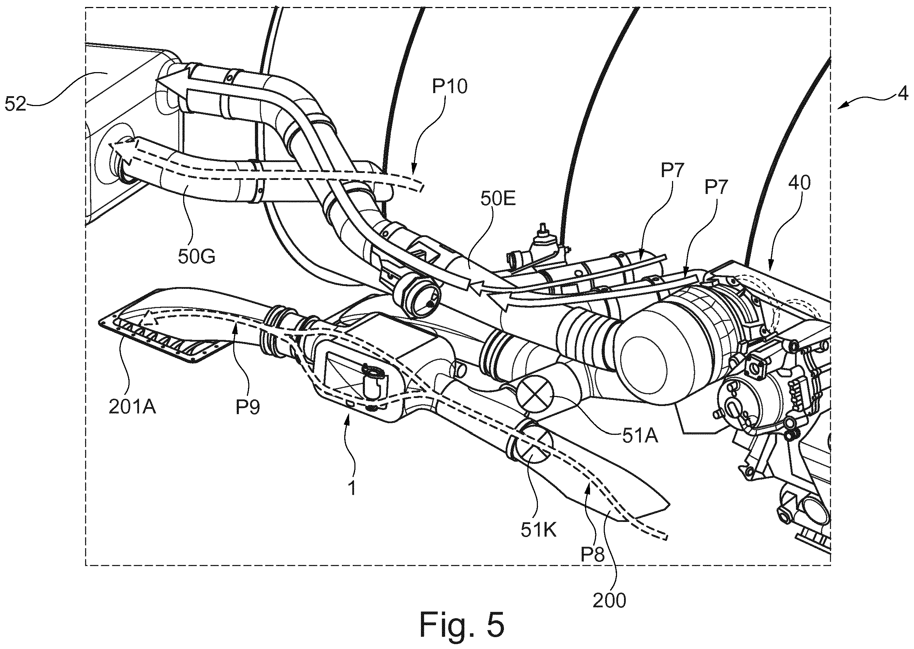

Fig. 5 zeigt anhand von Pfeilen die Strömungspfade P7-P10 von Luftströmen durch die verschiedenen Rohrleitungen während eines Regelbetriebs des Flugzeugtriebwerks 4, z.B. während eines Fluges des Flugzeugs 3, nachdem das Flugzeugtriebwerk 4 und/oder das Öl seine Betriebstemperatur erreicht hat.

Das Ventil 51A zwischen dem Druckluftstarter 40 und der Wärmetauschervorrichtung 1 ist geschlossen, sodass keine Luft durch die Rohrleitung 50A vom Druckluftstarter 40 zur Wärmeaustauschvorrichtung 1 strömt. Heiße Luft vom Verdichter, z.B. dem Hochdruckverdichter 43 des Flugzeugtriebwerks 4 strömt entlang eines Strömungspfades P7 durch die verzweigte Rohrleitung 50E hin zum Vorkühler 52 und kann von dort an die Atmosphärensteuereinheit 34 bereitgestellt werden.

Das Ventil 51K zwischen der Lufteinlassöffnung 200 am Triebwerkspylon 2 und dem Lufteinlass 110 der Wärmetauschervorrichtung 1 ist geöffnet, sodass (kalte) Umgebungsluft entlang eines Strömungspfades P8 von der Lufteinlassöffnung 200 zur Wärmetauschervorrichtung 1 freigegeben ist. Dieser Luftstrom strömt in die Wärmetauschervorrichtung 1 und umströmt darin den Treibstoff-Öl-Wärmetauscher 10. Auf diese Weise wird mittels der (kalten) Umgebungsluft das (im Betrieb heiße) Öl in der Wärmetauschervorrichtung 1 gekühlt. Vom Luftauslass 111 der Wärmetauschervorrichtung 1 strömt die Luft entlang eines Strömungspfades P9 durch die Luftauslassöffnung 201A in die Umgebung.

Entlang eines weiteren Strömungspfades P10 strömt (kalte) Luft vom Mantelstromkanal 44 durch die Rohrleitung 50G zum Vorkühler 52.

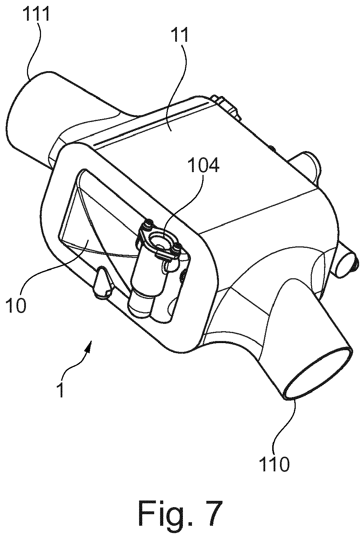

Die Fig. 7 bis 9 zeigen die Wärmetauschervorrichtung 1 aus Fig. 4 bis 6 im Detail. Die Wärmetauschervorrichtung 1 kann auch in den Systemen gemäß Fig. 2 und 3 eingesetzt werden.

Der Treibstoff-Öl-Wärmetauscher 10 ist an vier Seiten durch das Gehäuse 11 umschlossen. Der Treibstoff-Öl-Wärmetauscher 10 umfasst ein Wärmetauschergehäuse 100. Zwischen dem Wärmetauschergehäuse 100 des Treibstoff-Öl-Wärmetauschers 10 und dem Gehäuse 11 ist auf zumindest zwei (gegenüberliegenden) Seiten des Wärmetauschergehäuses 100 ein Abstand ausgebildet. Diese Abstände bilden jeweils einen Strömungspfad für Luft, die vom Lufteinlass 110 zum Luftauslass 111 der Wärmetauschervorrichtung 1 strömt. Die Strömungspfade (alternativ zumindest ein Strömungspfad) bilden gemeinsam eine Luftströmungspfadanordnung 112.

Der Lufteinlass 110 und der Luftauslass 111 weisen jeweils ein Anschlussstück oder eine Schnittstelle zur Verbindung mit den Rohrleitungen 50B, 50C auf.

Der Treibstoff-Öl-Wärmetauscher 10 ist zwischen dem Lufteinlass 110 und dem Luftauslass 111 angeordnet. Der Lufteinlass 110 und der Luftauslass 111 des Gehäuses 11 sind an gegenüberliegenden Seiten des Gehäuses 11 angeordnet. Luft, die vom Lufteinlass 110 zum Luftauslass 111 strömt, umströmt den Treibstoff-Öl-Wärmetauscher 10. Die Wärmetauschervorrichtung 1 umfasst somit innerhalb des Gehäuses 11 (gekapselt) einen Oberflächen-Luftkühler. An seiner dem Lufteinlass 110 zugewandten Seite ist ein (vorliegend gekrümmtes) Leitblech 105 angeordnet, das Luft um den Treibstoff-Öl-Wärmetauscher 10 herum leitet.

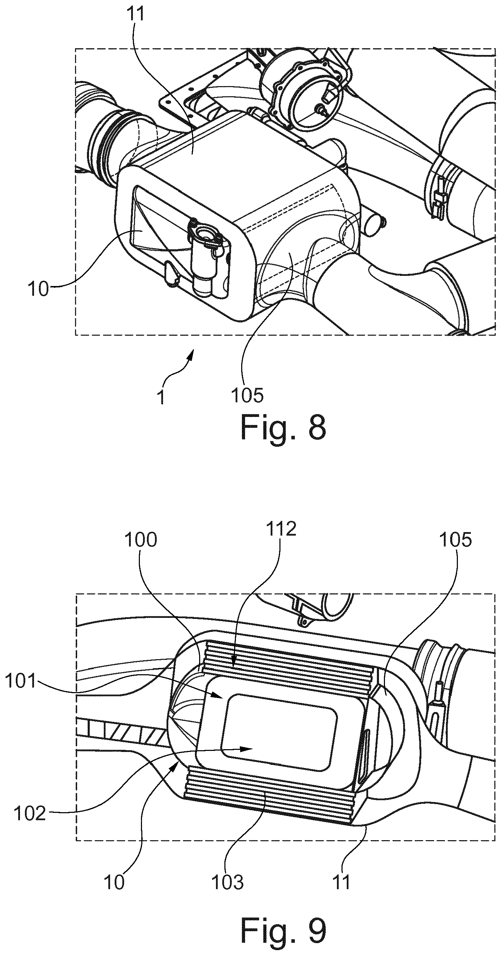

Wie insbesondere in Fig. 9 veranschaulicht, umfasst der Treibstoff-Öl-Wärmetauscher 10 eine Treibstoffströmungspfadanordnung 102 für Treibstoff, die von einer Ölströmungspfadanordnung 101 (vorliegend an zumindest vier Seiten) umschlossen ist. Die Ölströmungspfadanordnung 101 ist wiederum von der Luftströmungspfadanordnung 112 (an vorliegend zwei Seiten) umschlossen. Zumindest abschnittsweise sind die Treibstoffströmungspfadanordnung 102 und die Ölströmungspfadanordnung 101 koaxial zueinander angeordnet. Insbesondere kann vorgesehen sein, dass zumindest abschnittsweise die Treibstoffströmungspfadanordnung 102, die Ölströmungspfadanordnung 101 und die Luftströmungspfadanordnung 112 koaxial zueinander angeordnet sind. Die Treibstoffströmungspfadanordnung 102 bildet einen inneren Kern der Wärmetauschervorrichtung 1.

Für einen möglichst guten Wärmeaustausch sind am Wärmetauschergehäuse 100 im Inneren des Gehäuses 11 Kühlrippen 103 angebracht, die vorliegend jeweils senkrecht vom Wärmetauschergehäuse 100 abstehen. Luft, die vom Lufteinlass 110 zum Luftauslass 111 strömt, strömt entlang der Kühlrippen 103.

Luft in der Luftströmungspfadanordnung 112 kann somit Öl in der Ölströmungspfadanordnung 101 wärmen oder kühlen. Öl in der Ölströmungspfadanordnung 101 kann Treibstoff in der Treibstoffströmungspfadanordnung 102 wärmen oder kühlen. Hierdurch kann der Treibstoff auf eine solche Temperatur gebracht werden, dass er warm genug für eine effektive Verbrennung ist. Bei zu hohen Temperaturen, z.B. oberhalb von 120 °C, können sich der Treibstoff oder bestimmte Bestandteile des Treibstoffs jedoch zersetzen, wodurch Ventile verstopft werden könnten. Mittels der Wärmetauschervorrichtung 1 (z.B. durch eine entsprechende Regelung mittels des Steuerungssystems 14) kann der Treibstoff je nach Bedarf sowohl gekühlt als auch erwärmt werden, um eine optimale Temperatur einzustellen. Dies ist möglich, weil sowohl die Treibstoffströmungspfadanordnung 102 und die Ölströmungspfadanordnung 101 als auch die Luftströmungspfadanordnung 112 in eine gemeinsame Vorrichtung integriert (insbesondere im selben Gehäuse 11 untergebracht) sind.

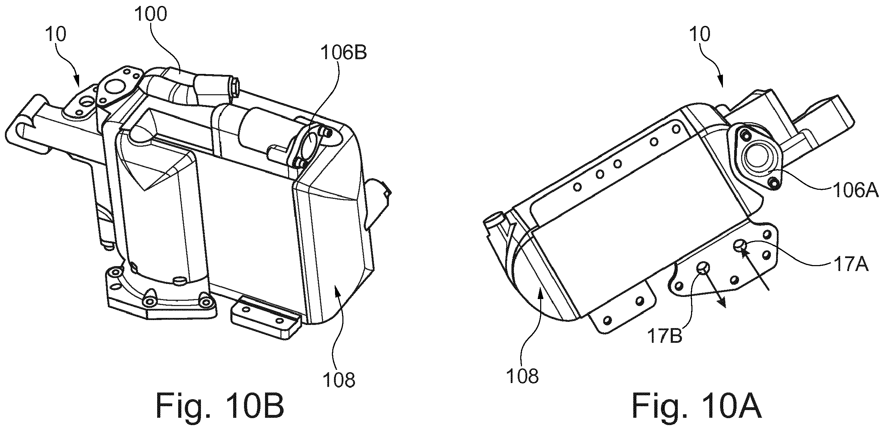

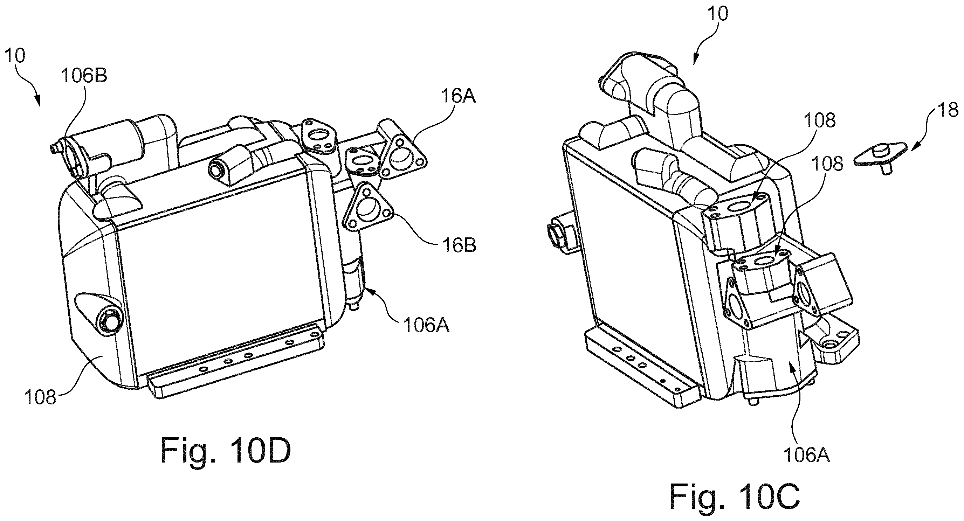

Die Fig. 10A bis 10H zeigen in verschiedenen Ansichten eine mögliche Ausführung eines Treibstoff-Öl-Wärmetauschers 10 für die vorstehend beschriebene Wärmetauschervorrichtung 1 im Detail.

Am Treibstoff-Öl-Wärmetauscher 10 ist ein Treibstoffeinlass 16A zum Einbringen von Treibstoff vorgesehen, der mit einem Treibstoffauslass 16B in Fluidverbindung steht. Ferner ist ein Öleinlass 17A zum Einbringen von Öl vorgesehen, der mit einem Ölauslass 17B in Fluidverbindung steht. Die Treibstoffeinlässe und -auslässe 16A, 16B und die Öleinlässe und -auslässe 17A, 17B sind mit dem Öl- und Treibstoffleitungssystem 15 verbindbar (siehe Fig. 3).

Ein Treibstoff-Bypassanschluss 106A ist über ein Bypassventil an die Treibstoffströmungspfadanordnung 102 angeschlossen, um bei einem möglichen Überdruck Treibstoff abzulassen. Falls beispielsweise ein Wasseranteil im Treibstoff vorliegt, der bei tiefen Temperaturen gefriert, kann über den Treibstoff-Bypassanschluss 106A dennoch (nicht erwärmter) Treibstoff an eine Brennkammer des Flugzeugtriebwerks 4 bereitgestellt werden.

Ein Öl-Bypassanschluss 106B ist über ein Bypassventil an die Ölströmungspfadanordnung 101 angeschlossen, um bei einem möglichen Überdruck Öl abzulassen. Je nach Bedarf kann der Öl-Bypassanschluss 106B auch gegenüber der z.B. in Fig. 10B gezeigten Ausrichtung auch um 90 Grad gedreht angeordnet sein, wie z.B. in Fig. 4 dargestellt.

Der Treibstoff-Öl-Wärmetauscher 10 umfasst ferner mehrere, vorliegend zwei Temperaturfühleranschlüsse 108, an die jeweils ein Temperaturfühler 18 (in Fig. 10C schematisch dargestellt) montiert werden kann. Jeweils einer der Temperaturfühleranschlüsse 108 erlaubt das Erfassen der Öltemperatur oder der Treibstofftemperatur. Die Temperaturfühler 18 sind mit dem Steuerungssystem 14 koppelbar, sodass das Steuerungssystem 14 durch Einstellen der Ventile die Temperatur des Öls und/oder des Treibstoffs regeln kann. Alternativ oder zusätzlich können ein oder mehrere Temperaturfühler 18 auch an anderen Stellen angebracht sein, z.B. an Rohr- oder Schlauchverbindungen, an einem Tank des jeweiligen Fluids oder am Flugzeugtriebwerk 4.

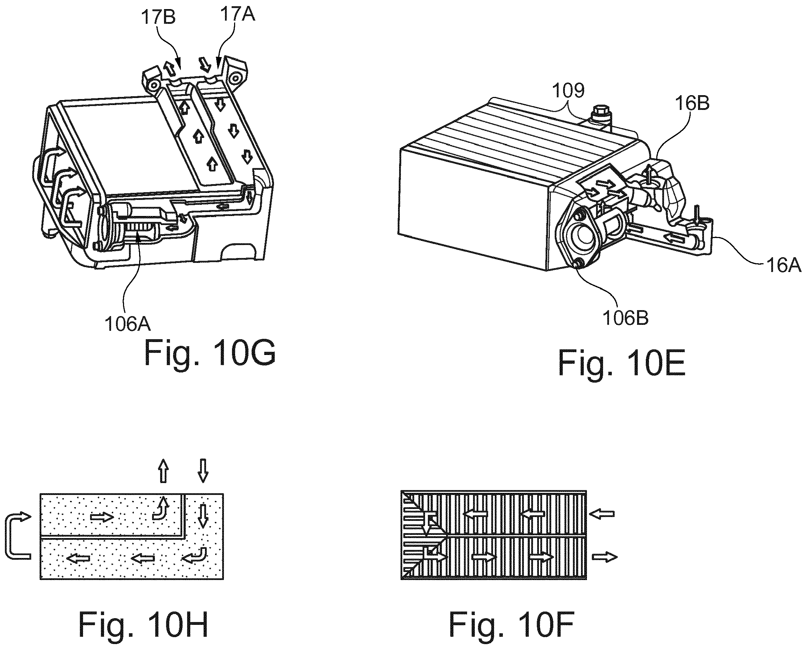

Teil des Wärmetauschergehäuses 100 ist eine Öl-Rückführungskappe 108. Die Öl-Rückführungskappe 108 ist konvex ausgebildet, und dient dazu, das Öl innerhalb einer Kühlermatrix 109 des Treibstoff-Öl-Wärmetauschers 10 zurückzuführen, wie insbesondere anhand von Fig. 10G und 10H anhand von Pfeilen veranschaulicht, die den Ölfluss durch die Kühlermatrix 109 zeigen. Die Fig. 10E und 10F stellen ebenfalls anhand von Pfeilen den Treibstofffluss durch die Kühlermatrix 109 dar. Der Treibstoff-Öl-Wärmetauscher 10 ist im gezeigten Beispiel so ausgebildet, dass Öl und Treibstoff in entgegengesetzten Richtung aneinander vorbei fließen.

Vorstehend wurde für die verschiedenen Luftführungen jeweils der Begriff Rohrleitung verwendet. Selbstverständlich kann aber auch jede andere geeignete, luftführende Verbindung eingesetzt werden, z.B. Schläuche etc.

### Bezugszeichenliste

- 1: Wärmetauschervorrichtung
- 10: Treibstoff-Öl-Wärmetauscher
- 100: Wärmetauschergehäuse
- 101: Ölströmungspfadanordnung
- 102: Treibstoffströmungspfadanordnung
- 103: Kühlrippen
- 104: Bypass-Auslass
- 105: Leitblech
- 106A: Treibstoff-Bypassanschluss
- 106B: Öl-Bypassanschluss
- 107: Öl-Rückführungskappe
- 108: Temperaturfühleranschluss
- 109: Kühlermatrix
- 11: Gehäuse
- 110: Lufteinlass
- 111: Luftauslass
- 112: Luftströmungspfadanordnung
- 14: Steuerungssystem
- 15: Öl- und Treibstoffleitungssystem
- 16A: Treibstoffeinlass
- 16B: Treibstoffauslass
- 17A: Öleinlass
- 17B: Ölauslass
- 18: Temperaturfühler
- 2: Triebwerkspylon
- 20: Pylongehäuse
- 200: Lufteinlassöffnung
- 201A-201C: Luftauslassöffnung
- 3: Flugzeug
- 30: Rumpf
- 31: Flügel
- 32: Hilfstriebwerk
- 33: Kabine
- 34: Atmosphärensteuereinheit
- 4: Flugzeugtriebwerk
- 40: Druckluftstarter
- 400: Luftauslass
- 401: Abdeckung
- 402: Lufteinlass
- 41: Hilfsgetriebe
- 42: Öltank
- 43: Hochdruckverdichter
- 44: Mantelstromkanal
- 45: Generator
- 50A-50J: Rohrleitung
- 51A-51J: Ventil
- 52: Vorkühler
- P1-P10: Strömungspfad

## Patentansprüche

1. Wärmetauschervorrichtung (1) für ein Flugzeugtriebwerk (4), mit einem Treibstoff-Öl-Wärmetauscher (10) zum Austausch von Wärme zwischen Treibstoff und Öl und einem Gehäuse (11) mit einem Lufteinlass (110) und einem Luftauslass (111), wobei der Treibstoff-Öl-Wärmetauscher (10) derart zumindest teilweise innerhalb des Gehäuses (11) angeordnet ist, dass er durch vom Lufteinlass (110) zum Luftauslass (111) strömende Luft umströmbar oder überströmbar ist.

2. Wärmetauschervorrichtung (1) nach Anspruch 1, **dadurch gekennzeichnet, dass** der Treibstoff-Öl-Wärmetauscher (10) zwischen dem Lufteinlass (110) und dem Luftauslass (111) angeordnet ist.

3. Wärmetauschervorrichtung (1) nach Anspruch 1 oder 2, **dadurch gekennzeichnet**, der Treibstoff-Öl-Wärmetauscher (10) eine Ölströmungspfadanordnung (101) und eine Treibstoffströmungspfadanordnung (102) umfasst.

4. Wärmetauschervorrichtung (1) nach Anspruch 3, **dadurch gekennzeichnet, dass** Wärme zwischen durch die Ölströmungspfadanordnung (101) strömendem Öl und durch die Treibstoffströmungspfadanordnung (102) strömendem Treibstoff austauschbar ist.

5. Wärmetauschervorrichtung (1) nach Anspruch 3 oder 4, **dadurch gekennzeichnet, dass** der Lufteinlass (110) mit dem Luftauslass (111) durch eine Luftströmungspfadanordnung (112) verbunden ist, wobei die Luftströmungspfadanordnung (112) die Ölströmungspfadanordnung (101) zumindest teilweise umgibt.

6. Wärmetauschervorrichtung (1) nach einem der Ansprüche 3 bis 5, **dadurch gekennzeichnet, dass** die Ölströmungspfadanordnung (101) die Treibstoffströmungspfadanordnung (102) zumindest teilweise umgibt.

7. Wärmetauschervorrichtung (1) nach einem der Ansprüche 3 bis 6, **dadurch gekennzeichnet, dass** der Treibstoff-Öl-Wärmetauscher (10) ein Wärmetauschergehäuse (100) umfasst, in dem die Ölströmungspfadanordnung (101) und die Treibstoffströmungspfadanordnung (102) untergebracht sind, wobei das Wärmetauschergehäuse (100) zumindest teilweise innerhalb des Gehäuses (11) angeordnet und durch vom Lufteinlass (110) zum Luftauslass (111) strömende Luft umströmbar oder überströmbar ist.

8. Wärmetauschervorrichtung (1) nach einem der vorhergehenden Ansprüche, **dadurch gekennzeichnet, dass** der Treibstoff-Öl-Wärmetauscher (10) Kühlrippen (103) umfasst, die durch vom Lufteinlass (110) zum Luftauslass (111) strömende Luft umströmbar sind.

9. Wärmetauschervorrichtung (1) nach einem der vorhergehenden Ansprüche, **gekennzeichnet durch** zumindest ein Ventil (51A, 51B) zum Steuern eines Luftstroms durch den Lufteinlass (110).

10. Wärmetauschervorrichtung (1) nach Anspruch 9, **gekennzeichnet durch** ein Steuerungssystem (14), das das zumindest eine Ventil (51A, 51B) in Abhängigkeit einer Öltemperatur, einer Treibstofftemperatur und/oder einer Lufttemperatur steuert.

11. System für ein Flugzeugtriebwerk (4), mit einem Triebwerkpylon (2) zur Befestigung des Flugzeugtriebwerks (4) an einem Flugzeug (3), **gekennzeichnet durch** eine Wärmetauschervorrichtung (1) nach einem der vorhergehenden Ansprüche, wobei die Wärmetauschervorrichtung (1) am oder im Triebwerkpylon (2) angeordnet ist.

12. System für ein Flugzeugtriebwerk (4), mit einem Druckluftstarter (40) zum Starten des Flugzeugtriebwerks (4), **gekennzeichnet durch** eine Wärmetauschervorrichtung (1) nach einem der Ansprüche 1 bis 10, wobei der Lufteinlass (110) der Wärmetauschervorrichtung (1) an einen Luftauslass (400) des Druckluftstarters (40) angeschlossen ist.

13. System nach Anspruch 12, **gekennzeichnet durch** eines oder mehrere Ventile (51A, 51B), die steuerbar sind, um selektiv Luft vom Luftauslass (400) des Druckluftstarters (40) und/oder Außenluft an den Lufteinlass der Wärmetauschervorrichtung (1) zu leiten.

14. Verfahren zum Betreiben eines Flugzeugtriebwerks (4), wobei mittels einer Wärmetauschervorrichtung (1) nach einem der Ansprüche 1 bis 10 Öl und Treibstoff an das Flugzeugtriebwerk (4) bereitgestellt wird.

15. Verfahren nach Anspruch 14, wobei eines oder mehrere Ventile (51A, 51B) der Wärmetauschervorrichtung (1) derart gesteuert werden, dass in einer Kaltstartphase des Flugzeugtriebwerks (4) Luft von einem Luftauslass (400) eines Druckluftstarters (40) des Flugzeugtriebwerks (4) an den Lufteinlass (110) der Wärmetauschervorrichtung (1) geleitet wird, um das Öl zu erwärmen, und während einer warmgelaufenen Betriebsphase des Flugzeugtriebwerks (4) Außenluft an den Lufteinlass (110) der Wärmetauschervorrichtung (1) geleitet wird, um das Öl zu kühlen.
